## Europäisches Patentamt

## European Patent Office

## Office européen des brevets

(19)

(11) Publication number: **0 225 857 B1**

# EUROPEAN PATENT SPECIFICATION

(12)

(45) Date of publication of patent specification: **07.08.91**      (51) Int. Cl.⁵: **B62D 33/06**

(21) Application number: **86830366.0**

(22) Date of filing: **09.12.86**

(54) Lorry cab having a driving position and a rest position with bunks.

(30) Priority: **11.12.85 IT 5420985 U**

(43) Date of publication of application:
**16.06.87 Bulletin 87/25**

(45) Publication of the grant of the patent:
**07.08.91 Bulletin 91/32**

(84) Designated Contracting States:
**DE ES FR GB NL SE**

(56) References cited:
**EP-A- 0 070 748**
**US-A- 4 121 684**

(73) Proprietor: **IVECO FIAT S.p.A.**
**Via Puglia 35**
**I-10156 Torino(IT)**

(72) Inventor: **Filippi, Federico**
**Via Mazzini 40,**
**I-10123 Torino(IT)**

(74) Representative: **Buzzi, Franco et al**
**c/o Jacobacci-Casetta & Perani S.p.A. Via**
**Alfieri, 17**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to lorry cabs including a driving position having a floor and seats for the drivers, and a rest position separate from the driving position and having two bunks located transverse the direction of movement of the vehicle.

In lorry cabs of the type defined above, the two bunks which are used for resting by the two drivers of the vehicle are usually provided above and behind the driving seats. This solution does not allow adequate privacy for the two drivers.

The object of the present invention is to enable the two zones to be used for resting by the two drivers to be separated so as to give them greater privacy and freedom.

This object is achieved according to the invention by a lorry cab of the type described, characterised in that the rest position comprises:

- a first zone having a first bunk located on the floor of the driving position behind the seats,
- a second zone separate from the first and having a second bunk located within a raised canopy which constitutes the roof of the cab,
- means for separating the second zone of the rest position from the first zone, and
- independent means of access to the first and second zones.

Further characteristics and advantages of the present invention will become apparent from the description which follows with reference to the appended drawings, in which:

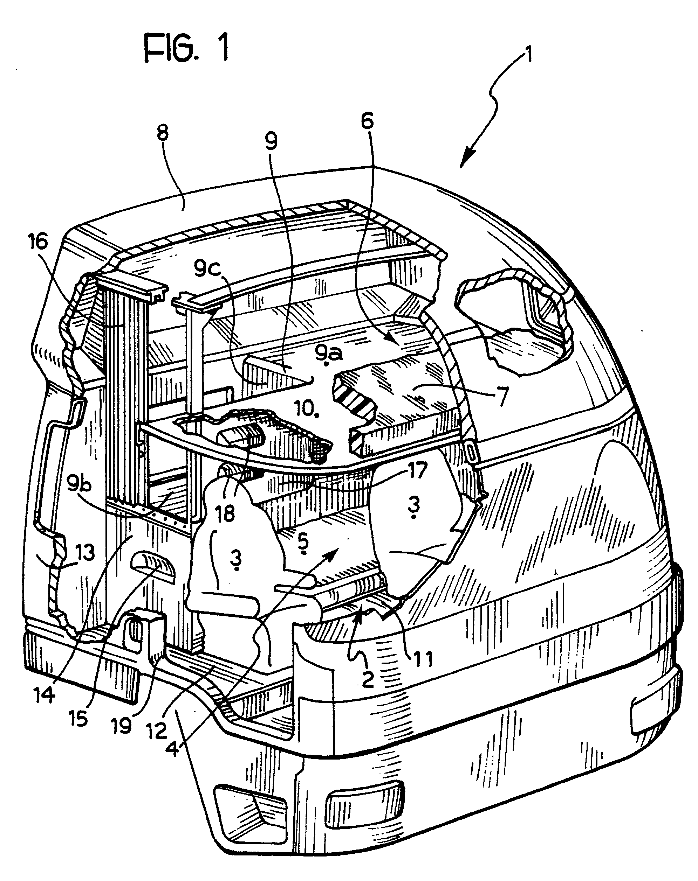

Figure 1 is a partially sectioned perspective view of a lorry cab according to the invention,

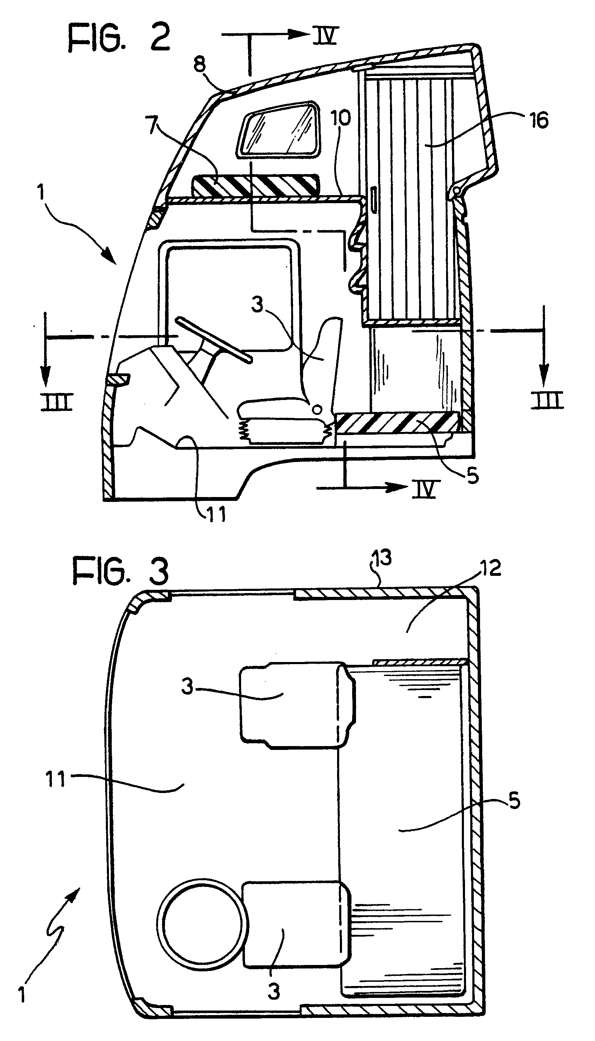

Figure 2 is a section taken of Figure 1,

Figure 3 is a section taken on the line III-III of Figure 2,

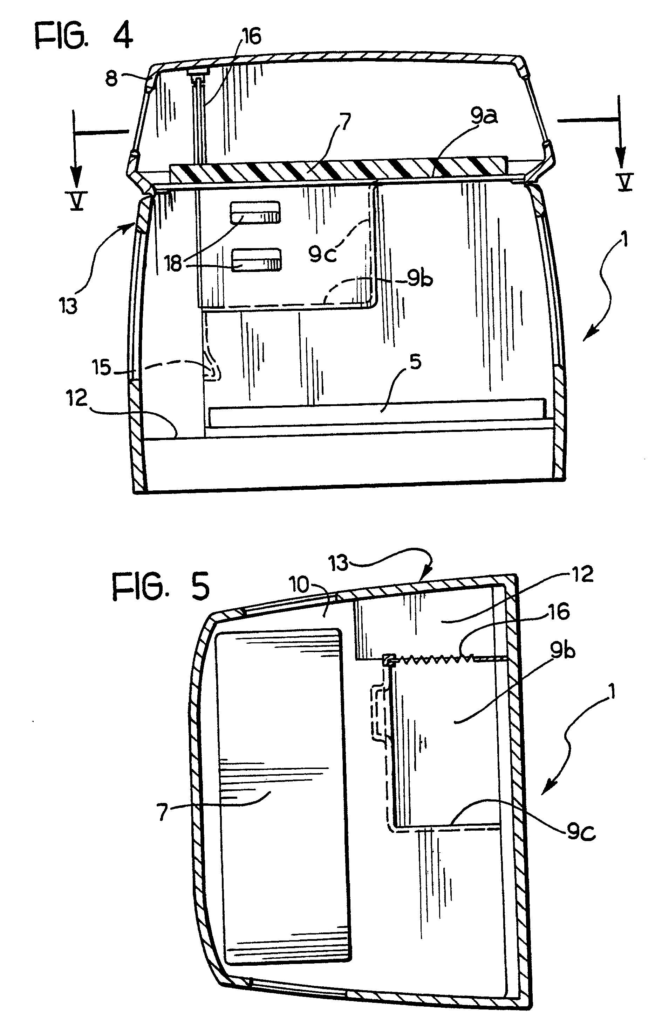

Figure 4 is a section taken on the line IV-IV of Figure 2, and

Figure 5 is a section taken on the line V-V of Figure 2.

With reference to the drawings, a lorry cab is generally indicated 1 and includes a driving position 2 with seats 3 for the drivers and a rest position separate from the driving position.

The rest position includes a first zone 4 having a bunk 5 located on the floor 11 to which the seats 3 are fixed, behind the latter and transverse the direction of movement. The rest position also includes a second zone 6 having a second bunk 7 disposed transverse the direction of movement within a raised canopy 8 which constitutes the roof of the cab 1. This raised canopy 8 has an external aerodynamic profile such as to act as an aerodynamic deflector for the cab.

The second zone 6 is separated both from the first zone 4 and from the driving position 2. This separation is acheived by means of a structure having a first part 9 surmounting the first zone 4 of the rest position and a second part 10 surmounting the driving position 2. The bunk 7 rests on this second part 10.

The first part of the structure 9, which, as stated, surmounts the first zone 4 of the rest position, includes a first horizontal plane 9a located at the level of the second part 10 of the structure and a second horizontal plane 9b located at a level intermediate the first plane 9a and the floor 11 of the driving position 2. Three vertical walls 9c, 14, 17 complete the structure. The vertical wall 9c constitutes a connection between the first horizontal plane 9a and the second horizontal plane 9b. The wall 17, however, is perpendicular to the preceding one and constitutes the connection between the second plane 9b and the second part of the structure 10. Finally, the vertical wall 14 is parallel to the wall 9c and defines the first zone 4 of the rest position, separating this region from the passageway 12 formed between the wall 14 and the side 13 of the cab 1.

The space 12 constitutes a lateral access passage to the second zone 6 of the rest position. By virtue of the step 15 provided on the lateral wall 14, it is possible to gain access to the plane 9b of the first part 9 of the structure. Access to the plane 9b is closed by a folding door 16. Once on this plane 9b, further steps 18 provided on the wall 17 finally allow access to the second part 10 of the structure on which the bunk 7 is located.

The arrangement described allows total and permanent separation of the second zone 6 of the rest position from the rest of the cab and especially from the first zone 4 of the rest position; this enables the two drivers to be independent and have a good degree of privacy.

## Claims

1. Lorry cab (1) comprising:
    - a driving position (2) having a floor (11) and seats (3) for the drivers, and
    - a rest position separate from the driving position (2) and having two bunks (5, 7) located transverse the direction of movement of the vehicle, characterised in that the rest position comprises:
    - a first zone (4) having a first bunk (5) located on the floor (11) of the driving position (2) behind the seats (3),
    - a second zone (6) separate from the first (4) and having a second bunk (7) located within a raised canopy (8) which constitutes the roof of the cab (1),
    - means for separating the second zone (6) of the rest position from the first zone (4), and
- independent means of access to the first (4) and second (6) zones.

2. Cab according to Claim 1, characterised in that the separation means comprise a structure having:
   - a first part (9) surmounting the first zone (4) of the rest position, and
   - a second part (10) surmounting the driving position (2), on which the bunk (7) of the second zone (6) of the rest position bears, the first part including:
   - a first horizontal plane (9a) located at the level of the second part (10),
   - a second horizontal plane (9b) located at a level between the first plane (9a) and the floor (11) of the driving position (2),
   - a first vertical wall (9c) connecting the horizontal planes (9a, 9b),
   - a second vertical wall (17) perpendicular to the first connecting wall, between the second plane (9b) and the second part (10) of the structure, and
   - a third vertical wall (14) parallel to the first (9c) and accessible through a lateral access passage (12) which is located between the third vertical wall (14) and the side (13) of the cab and which communicates with a lateral opening (19) formed in the side of (13) of the cab (1) for access to the driving zone (2).

3. A cab according to Claim 2, characterised in that the second (17) and third (14) vertical walls have steps (15, 18).

4. A cab according to Claim 2, characterised in that the lateral access passage (12) has an associated folding door (16) or the like.

5. A cab according to Claim 1, characterised in that the raised canopy (8) has an external profile such as to act as as an aerodynamic deflector for the cab (1).

**Revendications**

1. Cabine de camion (1), comprenant :
   - une position de conduite (2) ayant un plancher (11) et des sièges (3) pour les conducteurs, et
   - une position de repos séparée de la position de conduite (2) et ayant deux couchettes (5, 7) situées transversalement au sens de marche du véhicule, caractérisée en ce que la position de repos comprend :

   - une première zone (4) ayant une première couchette (5) placée sur le plancher (11) de la position de conduite (2) derrière les sièges (3),
   - une seconde zone (6) séparée de la première (4) et ayant une seconde couchette (7) placée à l'intérieur d'un auvent surélevé (4) qui constitue le toit de la cabine (1),
   - des moyens pour séparer la seconde zone (6) de la position de repos de la première zone (4), et
   - des moyens indépendants d'accès à la première (4) et à la seconde (6) zones.

2. Cabine selon la revendication 1, caractérisée en ce que les moyens de séparation comprennent une structure ayant :
   - une première partie (9) surmontant la première zone (4) de la position de repos, et
   - une seconde partie (10) surmontant la position de conduite (2), sur laquelle repose la couchette (7) de la seconde zone (7) de la position de repos, la première partie comprenant :
   - un premier plan horizontal (9a) situé au niveau de la seconde partie (10),
   - un second plan horizontal (9b) situé à un niveau entre le premier plan (9a) et le plancher (11) de la position de conduite (2),
   - une première paroi verticale (9c) reliant les plans horizontaux (9a, 9b),
   - une seconde paroi verticale (17) perpendiculaire à la première paroi de connexion, entre le second plan (9b) et la seconde partie (10) de la structure, et
   - une troisième paroi verticale (14) parallèle à la première (9c) et accessible par un passage d'accès latéral (12) qui est placé entre la troisième paroi verticale (14) et le côté (13) de la cabine et qui communique avec une ouverture latérale (19) formée dans le côté (13) de la cabine (1) pour l'accès à la zone de conduite (2).

3. Cabine selon la revendication 2, caractérisée en ce que la seconde (17) et la troisième (14) parois verticales ont des marches (15, 18).

4. Cabine selon la revendication 2, caractérisée en ce que le passage d'accès latéral (12) a une porte pliante associée (16) ou l'équivalent.

5. Cabine selon la revendication 1, caractérisée en ce que l'auvent surélevé (8) a un profil extérieur qui agit comme un déflecteur aérodynamique pour la cabine (1).

**Patentansprüche**

1. Lastkraftfahrzeugkabine (1) mit
   - einem Fahrbereich (2) mit einem Boden (11) und Sitzen (3) für die Fahrer, und
   - einem von dem Fahrbereich (2) getrennten Ruhebereich mit zwei quer zur Bewegungsrichtung des Fahrzeugs angeordneten Schlafstellen (5, 7),
   **dadurch gekennzeichnet,**
   daß der Ruhebereich umfaßt:
   - eine erste Zone (4) mit einer ersten Schlafstelle (5), die hinter den Sitzen (3) auf dem Boden (11) des Fahrbereichs (2) angeordnet ist,
   - eine von der ersten Zone (4) getrennte zweite Zone (6) mit einer zweiten Schlafstelle (7), die in einem die Decke der Kabine (1) bildenden erhöhten Kabinendach (8) angeordnet ist,
   - Mittel zum Abtrennen der zweiten Zone (6) des Ruhebereichs von der ersten Zone (4) und
   - Mittel für den unabhängigen Zugang zu der ersten (4) und der zweiten Zone (6).

2. Kabine nach Anspruch 1, dadurch gekennzeichnet, daß die Abtrennmittel eine Konstruktion umfassen mit
   - einem die erste Zone (4) des Ruhebereichs überragenden ersten Teil (9) und
   - einem den Fahrbereich (2) überragenden zweiten Teil (10), auf dem sich die Schlafstelle (7) der zweiten Zone (6) des Ruhebereichs befindet,
   wobei der erste Teil umfaßt
   - eine erste horizontale Ebene (9a), die in Höhe des zweiten Teils (10) angeordnet ist,
   - eine zweite horizontale Ebene (9b), die in einer Höhe zwischen der ersten Ebene (9a) und dem Boden (11) des Fahrbereichs (2) angeordnet ist,
   - eine erste vertikale Wand (9c), die die horizontalen Ebenen (9a, 9b) miteinander verbindet,
   - eine zweite vertikale Wand (17), die senkrecht zu der ersten Verbindungswand zwischen der zweiten Ebene (9b) und dem ersten Teil (10) der Konstruktion angeordnet ist, und
   - eine zu der ersten Wand (9c) parallele dritte vertikale Wand (14), die über einen seitlichen Durchgang (12) zugänglich ist, der zwischen der dritten vertikalen Wand (14) und der Seite (13) der Kabine liegt und mit einer seitlichen Öffnung (19) in Verbindung steht, die für den Zutritt zu dem Fahrbereich (2) in der Seite (13) der Kabine (1) ausgebildet ist.

3. Kabine nach Anspruch 2, dadurch gekennzeichnet, daß die zweite (17) und die dritte vertikale Wand (14) Stufen (15, 18) haben.

4. Kabine nach Anspruch 2, dadurch gekennzeichnet, daß dem seitlichen Durchgang (12) eine Falttür (16) oder dergleichen zugeordnet ist.

5. Kabine nach Anspruch 1, dadurch gekennzeichnet, daß das erhöhte Kabinendach (8) ein solches Außenprofil hat, daß es als aerodynamischer Deflektor für die Kabine (1) wirkt.

# FIG. 1

**FIG. 2**

**FIG. 3**

FIG. 4

FIG. 5